# EUROPÄISCHE PATENTANMELDUNG

(11) **EP 2 051 165 A2**
(43) Veröffentlichungstag der Anmeldung: **22.04.2009**
(21) Anmeldenummer: 08102168.5
(22) Anmeldetag: 29.02.2008
(51) Int. Cl.: G06F 11/07

(54) **Überwachungseinheit und Auswerteeinheit zum Überprüfen einer Fehlerfreiheit eines Systems**

(30) Priorität: 17.04.2007 DE 102007018003
(71) Anmelder: ROBERT BOSCH GMBH, 70442 Stuttgart (DE)
(72) Erfinder: Harport, Stefan, 74535 Mainhardt (DE)

(57) **Zusammenfassung**

Die Erfindung betrifft eine Überwachungseinheit (3) zur Überwachung der Funktion einer Verarbeitungseinheit (2), umfassend einen Überwachungsanschluss (31) zum Überwachen eines Betriebs der Verarbeitungseinheit, einen Notlaufsignalausgang (33) zur Ausgabe eines Notlaufsignals (NLS), das angibt, ob ein Fehler beim Betrieb der Verarbeitungseinheit (2) festgestellt wurde oder nicht, wobei das Notlaufsignal (NLS) einem Signal mit wechselndem Pegel entspricht, wenn kein Fehler festgestellt wurde, und einem Signal mit konstantem Pegel entspricht, wenn ein Fehler festgestellt wurde.

## Beschreibung

Die Erfindung betrifft eine Überwachungseinheit zum Signalisieren mithilfe eines Notlaufsignals, ob eine Verarbeitungseinheit fehlerfrei arbeitet, sowie eine Auswerteeinheit zum Detektieren des Notlaufsignals und zum Aktivieren von Notlauffunktionen bei einem Fehlerfall. Die Erfindung betrifft weiterhin ein Verfahren zum Überwachen der Funktion einer Verarbeitungseinheit.

Überwachungseinheiten zur Überwachung der Funktion von Mikroprozessoren oder sonstigen Verarbeitungseinheiten sind allgemein auch unter dem Namen "Watchdog" bekannt. Eine derartige Überwachungseinheit ist mit dem Mikroprozessor gekoppelt und überwacht die ordnungsgemäße Funktion des Mikroprozessors, z.B. indem ein externer Anschluss des Mikroprozessors dahingehend überprüft wird, ob innerhalb einer bestimmten Zeitdauer dort ein Pegelwechsel detektiert werden kann. Der externe Anschluss kann dabei ein dafür vorgesehener Anschluss oder ein für eine Datenübertragung ansonsten verwendeter Anschluss sein. Das in dem Mikroprozessor durchgeführte Mikroprogramm stellt dabei sicher, dass bei einem ordnungsgemäßen Betrieb des Mikroprozessors an dem entsprechenden Anschluss sicher ein Pegelwechsel innerhalb einer definierten Zeitdauer auftritt. Kann kein solcher Pegelwechsel detektiert werden, wird auf einen Fehler in dem Mikroprozessor geschlossen.

Alternativ ist es möglich, dass die Überwachung durch regelmäßiges Übertragen von Kommandos mittels Kommunikation zwischen Überwachungseinheit und Mikroprozessor (z.B. über eine SPI-Schnittstelle) realisiert wird. Z.B. kann die Überwachungseinheit mit Hilfe eines Kommandos eine Reaktion des Mikroprozessors anfordern, der innerhalb eines Zeitraums antworten muss., Ansonsten wird ein Fehlerfall festgestellt.

Die Überwachungseinheit wertet den Signalverlauf an dem entsprechenden Anschluss des Mikroprozessors aus und generiert ein Signal auf einer Ausgangsleitung, dessen Pegel den ordnungsgemäßen Betrieb des Mikroprozessors oder einen aufgetretenen Fehler anzeigt. Weiterhin kann die Überwachungseinheit weitere Parameter überwachen, wie z.B. die Spannungsversorgung, sowie Parameter, wie z.B. die Chiptemperatur der Überwachungseinheit, insbesondere der Schaltung für die Spannungsregelung.

Ein solches Ausgangssignal von der Überwachungseinheit wird dann von einer Auswerteeinheit an anderer Stelle des Gesamtsystems aufgenommen und entsprechende Funktionen abhängig von dem Ausgangssignal der Überwachungseinheit aktiviert. Solche Funktionen können beispielsweise das Durchführen von Notprogrammen, das Abschalten des Gesamtsystems und dergleichen sein.

Der Nachteil eines solchen Systems kann darin bestehen, dass die Signalleitung, über die das Ausgangssignal der Überwachungseinheit an die Auswerteeinheit übertragen wird, mit einem weiteren Potenzial des Gesamtsystems, wie z.B. einem Massepotenzial, einem Versorgungsspannungspotenzial, oder einem sonstigen Potenzial kurzgeschlossen werden kann, wodurch ein Fehlerfall angezeigt wird, obwohl kein Fehler im Mikroprozessor aufgetreten ist, oder wodurch ein in dem Mikroprozessor auftretender Fehlerfall aufgrund des Kurzschlusses nicht an die Auswerteeinheit signalisiert werden kann.

Es ist Aufgabe der vorliegenden Erfindung, eine zuverlässige Fehlererkennung zu gewährleisten, die insbesondere das Gesamtsystem gegen Kurzschlüsse auf der Übertragungsleitung zwischen Überwachungseinheit und Auswerteeinheit gegen Kurzschlüsse zu einem festgelegten Potenzial gewährleistet.

Diese Aufgabe wird durch die Überwachungseinheit gemäß Anspruch 1 sowie durch die Auswerteeinheit und das Verfahren zum Überwachen gemäß den nebengeordneten Ansprüchen gelöst.

Weitere vorteilhafte Ausgestaltungen der Erfindung sind in den abhängigen Ansprüchen angegeben.

Gemäß einem ersten Aspekt ist eine Überwachungseinheit zur Überwachung der Funktion einer Verarbeitungseinheit vorgesehen. Die Überwachungseinheit umfasst einen Überwachungsanschluss, um einen Betrieb der Verarbeitungseinheit zu überwachen, und einen Notlaufsignalausgang, um ein Notlaufsignals auszugeben, das angibt, ob ein Fehler beim Betrieb der Verarbeitungseinheit festgestellt wurde oder nicht. Das Notlaufsignal entspricht einem Signal mit wechselndem Pegel, wenn kein Fehler festgestellt wurde, und entspricht einem Signal mit konstantem Pegel, wenn ein Fehler festgestellt wurde.

Weiterhin kann das Signal mit wechselndem Pegel zwischen einem ersten Pegel und einem zweiten Pegel verlaufen. Insbesondere kann das Signal mit wechselndem Pegel als periodische Signal in Form eines Rechtecksignals, eines Dreiecksignals oder eines sinusförmigen Signals entsprechen.

Ein Überwachungsanschluss zum Verbinden mit einem Anschluss der Verarbeitungseinheit kann vorgesehen sein, um den Betrieb der Verarbeitungseinheit zu überwachen. Die Überwachungseinheit kann an dem Überwachungsanschluss einen Fehler detektieren, wenn kein Pegelwechsel innerhalb einer vorbestimmten Zeitdauer erfolgt.

Gemäß einer weiteren Ausführungsform ist die Überwachungseinheit ausgebildet, um bei Auftreten eines Fehlers ein Rücksetzsignal auszugeben, um die Verarbeitungseinheit zurückzusetzen.

Nach einer Rücknahme des Rücksetzsignals kann vorgesehen sein, dass die Ausgabe des Signals mit wechselndem Pegel als Notlaufsignal erst nach Ablauf einer Neustart-Zeitdauer und/oder einer Anlauf-Zeitdauer aufgenommen wird, wobei die Neustart-Zeitdauer einer festgelegten Zeitdauer und die Anlauf-Zeitdauer einer Zeitdauer entspricht, während der eine vorbestimmte Anzahl von Pegelwechseln am Überwachungsanschluss jeweils während einer vorbestimmten Zeitdauer detektiert wird.

Gemäß einem weiteren Aspekt ist eine Auswerteinheit zum Auswerten des Notlaufsignals vorgesehen. Die Auswerteeinheit umfasst eine Empfangseinheit, die ausgebildet ist, das Notlaufsignal zu empfangen, und eine Auslöseeinheit, um eine Notlauffunktion zu aktivieren, wenn als Notlaufsignal kein Signal mit wechselndem Pegel empfangen wird.

Die Auslöseeinheit kann ferner ausgebildet sein, das Gesamtsystems oder Teile davon und/oder ein verzögertes Abschalten und/oder einen Diagnoseprozess zu starten, wenn kein Signal mit wechselndem Pegel empfangen wird.

Gemäß einem weiteren Aspekt ist ein Gesamtsystem mit einer Verarbeitungseinheit, mit der obigen Überwachungseinheit und der obigen Auswerteeinheit vorgesehen.

Gemäß einem weiteren Aspekt ist ein Verfahren zum Überwachen der Funktion einer Verarbeitungseinheit vorgesehen. Das Verfahren umfasst die Schritte des Überwachens eines Betriebs der Verarbeitungseinheit, um einen Fehler festzustellen,; des Ausgebens eines Notlaufsignals, das angibt, ob ein Fehler in der Verarbeitungseinheit festgestellt wurde oder nicht, durch eine Überwachungseinheit, wobei das Notlaufsignal einem Signal mit wechselndem Pegel entspricht, wenn kein Fehler festgestellt wurde, und einem Signal mit konstantem Pegel entspricht, wenn ein Fehler festgestellt wurde; des Empfangens des Notlaufsignals in einer von der Überwachungseinheit getrennten Auswerteeinheit; und des Aktivierens einer Notlauffunktion in der Auswerteeinheit, wenn als Notlaufsignal kein Signal mit wechselndem Pegel empfangen wird.

Bevorzugte Ausführungsformen der Erfindung werden nachfolgend anhand der beigefügten Zeichnungen näher erläutert. Es zeigen:
Fig. 1 ein Blockschaltbild eines Gesamtsystems mit einem Mikroprozessor, einer Überwachungseinheit und einer Auswerteeinheit gemäß einer Ausführungsform der vorliegenden Erfindung;
Fig. 2 ein Signal-Zeit-Diagramm zum Darstellen eines Signalverlaufs eines Notlaufsignals für eine Überwachungseinheit gemäß der vorliegenden Erfindung;
Fig. 3 ein Signal-Zeit-Diagramm für eine Überwachungseinheit gemäß einer weiteren Ausführungsform der vorliegenden Erfindung.

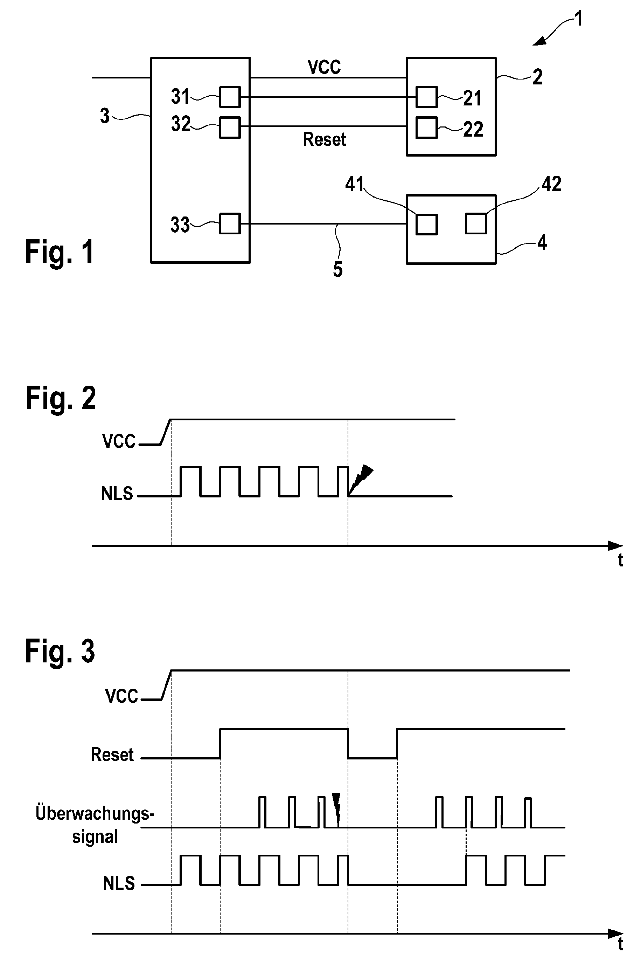

Fig. 1 zeigt ein Gesamtsystem 1 mit einem Mikroprozessor 2, dessen Funktionen bzw. ordnungsgemäßer Betrieb überwacht werden soll. Der Mikroprozessor 2 ist mit einer Überwachungseinheit 3 verbunden, über die dem Mikroprozessor 2 eine geregelte Versorgungsspannung VCC bereitgestellt wird. Die Überwachungseinheit 3 ist weiterhin mit einer separaten Auswerteeinheit 4 verbunden.

Die Auswerteeinheit 4 umfasst eine Auslöseeinheit 42, die das Aktivieren von bestimmten Notlauffunktionen übernimmt, wenn die Überwachungseinheit 3 einen in dem Mikroprozessor 2 aufgetretenen Fehler über eine Verbindungsleitung 5 signalisiert. Die Verbindungsleitung ist mit einer Empfangseinheit 41 der Auswerteeinheit 4 verbunden, die anhand des empfangenen Signals einen Fehlerfall oder einen Normalbetriebsfall des Mikroprozessors entnimmt.

Die Überwachungseinheit 3 ist mit dem Mikroprozessor 2 über einen Anschluss 21 des Mikroprozessors 2 verbunden, der als ein separater Anschluss für die Überwachung der internen Funktionen des Mikroprozessors 2 oder als sonstiger Datenausgabeanschluss vorgesehen sein kann. Der in dem Mikroprozessor 2 auszuführende Programmcode sieht vor, dass innerhalb einer bestimmten Zeitdauer sichergestellt wird, dass ein Pegelwechsel an dem Anschluss 21 erfolgt. Die Überwachungseinheit 3 detektiert über ihren Überwachungsanschluss 31 die Pegelwechsel und überprüft, ob die Pegelwechsel in der vorbestimmten Zeitdauer auftreten. Wird zumindest ein Pegelwechsel in der vorbestimmten Zeitdauer detektiert, wird auf einen fehlerfreien Betrieb des Mikroprozessors geschlossen. Unterbleibt ein Pegelwechsel innerhalb der vorbestimmten Zeitdauer, so erkennt die Überwachungseinheit 3 einen Fehler und kann über ihren Rücksetzanschluss 32 ein Rücksetzsignal Reset generieren, das an einen entsprechenden Rücksetzeingang 22 des Mikroprozessors angelegt wird. Daraufhin wird der Mikroprozessor zurückgesetzt.

Die Überwachungseinheit 3 generiert als Notlaufsignal NLS ein Signal mit wechselnden Pegeln, vorzugsweise ein periodisches Signal, das an die Auswerteeinheit 4 übertragen wird. Das Vorliegen des periodischen Signals als Notlaufsignal gibt an, dass die Überwachungseinheit 3 keinen Fehler in dem Mikroprozessor 2 festgestellt hat.

In Fig. 2 ist ein beispielhafter Verlauf eines solchen Notlaufsignales dargestellt. Dort ist das Notlaufsignal als ein Rechtecksignal ausgebildet, das einen ersten niedrigen Pegel und einen zweiten hohen Pegel aufweist. Der erste und zweite Pegel können dem Massepegel bzw. Versorgungsspannungspegel entsprechen oder auch anderen Spannungspegeln. Vorzugsweise werden Spannungspegel verwendet, die auch für andere Zwecke der Überwachungseinheit 3 vorhanden sind. Anstelle des Rechtecksignals können auch anders geformte Signalverläufe als Notlaufsignal NLS verwendet werden, wie z.B. Dreiecksignale oder Sinussignale mit Scheitelwerte, die dem ersten bzw. zweiten Pegel entsprechen. Der Signalverlauf des Notlaufsignals NLS sollte jedoch so gewählt sein, dass dieses in technisch einfacher Weise durch die Auswerteeinheit 4 zu detektieren ist, so dass dort bei Vorliegen des Notlaufsignals NLS von einem ordnungsgemäßen Betrieb des Mikroprozessors 2 ausgegangen werden kann.

Ändert sich das Notlaufsignal NLS insbesondere auf einen festen Pegel, so erkennt die Auslöseeinheit 42 der Auswerteeinheit 4 einen möglicherweise aufgetretenen Fehler und führt entsprechende Notlauffunktionen aus.

Auf diese Weise können Kurzschlüsse der Verbindungsleitung 5 zur Übertragung des Notlaufsignals NLS von der Überwachungseinheit 3 zur Auswerteeinheit 4 zu einem festen Potenzialpegel, wie z.B. dem Massepotenzial oder einem der Versorgungsspannungspotenziale erkannt werden, da in der Auswerteeinheit 4 kein periodisches Notlaufsignal mehr empfangen werden kann.

Die Überwachungseinheit 3 startet mit der Ausgabe des Notlaufsignals bereits mit dem Anlegen der Versorgungsspannung. Da bei Einschalten des Gesamtsystems das Rücksetzsignal reset von der Überwachungseinheit 3 an den Mikroprozessor 2 angelegt wird, wird das Notlaufsignal NLS zunächst durch die Überwachungseinheit 3 ausgegeben, ohne dass an dem Anschluss 21 des Mikroprozessors der Pegelwechsel detektiert wird. Erst nach Deaktivieren des Rücksetzsignals (gezeigt ist ein Rücksetzsignal bei invertierter Logik, High-Pegel) beginnt die Überwachungseinheit 3 damit, den Anschluss 21 des Mikroprozessors auf Pegelwechsel innerhalb der vorbestimmten Zeitdauer zu überprüfen. Liegen diese vor, wird die Ausgabe des Notlaufsignals NLS als periodisches Signal fortgesetzt.

Kann kein weiterer Pegelwechsel innerhalb der vorbestimmten Zeitdauer an dem Anschluss 21 erkannt werden, so wird die Ausgabe des periodischen Notlaufsignals unverzüglich abgebrochen und stattdessen ein konstanter Signalpegel, wie z.B. ein Massepotenzial ausgegeben. Gleichzeitig kann die Überwachungseinheit 3 ein Rücksetzsignal Reset generieren, um den Mikroprozessor zurückzusetzen.

Die Wiederaufnahme der Ausgabe des Notlaufsignals NLS kann nach einer bestimmten Wartezeit erfolgen. Die Wartezeit ergibt sich aus einer Neustart-Zeit t_{N} und einer Zeitdauer t_{S} während der für eine bestimmte Anzahl von Malen an dem Anschluss 21 jeweils ein Pegelwechsel innerhalb der vorbestimmten Zeitdauer erkannt wird. Im in Fig. 3 gezeigten Ausführungsbeispiel wird die z.B. die Ausgabe des Notlaufsignals NLS wieder aufgenommen, wenn nach dem Zurücknehmen (d.h. Deaktivieren) des Rücksetzsignals Reset die Neustart-Zeit t_{N} verstrichen ist und anschließend das zweite Mal ein Pegelwechsel innerhalb der vorbestimmten Zeitdauer erfolgt ist. Je nach Anwendungsfall kann sowohl auf das Vorsehen der Neustart-Zeit t_{N} als auch auf das Vorsehen der Zeitdauer t_{S} verzichtet werden.

Weiterhin kann im fehlerfreien Betrieb des Mikroprozessors 2 das Notlaufsignal mit unterschiedlicher Frequenz ausgegeben werden. Auf diese Weise kann die Überwachungseinheit 3 verschiedene Zustände an die Auswerteeinheit 4 signalisieren, z.B. eine Häufigkeit des periodischen Signals am Überwachungsanschluss 31 der Überwachungseinheit, die möglicherweise auf eine Belastung des Mikroprozessors schließen lässt. Bei häufiger detektieren Pegelwechsel ist die Kapazität des Mikroprozessors 2 nicht vollständig ausgelastet, während bei zunehmender Verarbeitungslast die Pegelwechsel innerhalb der vorbestimmten Zeitdauer seltener werden.

Die Auswerteeinheit 4 aktiviert die Notlauffunktion, sobald als Notlaufsignal NLS kein periodisches Signal mehr empfangen werden kann. Die Notlauffunktion kann ein Abschalten des Gesamtsystems oder Teile davon, ein verzögertes Abschalten, einen Start eines Diagnoseprozesses, einen Start von (redundanten) Teilfunktionen und dergleichen auslösen.

Nach einem Auslösen der Notlauffunktionen erfolgt ein erneutes Auslösen der Notlauffunktionen erst, nachdem das periodische Signal wieder empfangen wurde und dieses wieder abgebrochen wird, d.h. nachdem das periodische Signal erneut zu einem konstanten Signalpegel wechselt.

Es kann eine weitere Verbindung zwischen dem Mikroprozessor und der Überwachungseinheit vorgesehen werden, über die sich das Notlaufsignal auf einen konstanten Pegel setzen lässt, ohne das ein Fehler in dem Mikroprozessor aufgetreten ist. Dies dient dazu die Funktion der Überwachungseinheit zu überprüfen.

## Patentansprüche

1. Überwachungseinheit (3) zur Überwachung der Funktion einer Verarbeitungseinheit (2); umfassend:
- einen Überwachungsanschluss (31) zum Überwachen des Betriebs der Verarbeitungseinheit;
- einen Notlaufsignalausgang (33) zur Ausgabe eines Notlaufsignals (NLS), das angibt, ob ein Fehler beim Betrieb der Verarbeitungseinheit (2) festgestellt wurde oder nicht;
**dadurch gekennzeichnet, dass**
das Notlaufsignal (NLS) einem Signal mit wechselndem Pegel entspricht, wenn kein Fehler festgestellt wurde und einem Signal mit konstantem Pegel entspricht, wenn ein Fehler festgestellt wurde.

2. Überwachungseinheit (3) nach Anspruch 1, wobei das Signal mit wechselndem Pegel zwischen einem ersten Pegel und einem zweiten Pegel verläuft.

3. Überwachungseinheit (3) nach Anspruch 1 oder 2, wobei das Signal mit wechselndem Pegel einem periodischen Signal in Form eines Rechtecksignals, eines Dreiecksignals oder eines sinusförmigen Signals entspricht.

4. Überwachungseinheit nach einem der Ansprüche 1 bis 3, wobei ein Überwachungsanschluss (31) zum Verbinden mit einem Anschluss der Verarbeitungseinheit vorgesehen ist, um den Betrieb der Verarbeitungseinheit zu überwachen.

5. Überwachungseinheit (3) nach Anspruch 4, wobei die Überwachungseinheit (3) an dem Überwachungsanschluss (31) einen Fehler detektiert, wenn kein Pegelwechsel innerhalb einer vorbestimmten Zeitdauer erfolgt.

6. Überwachungseinheit (3) nach einem der Ansprüche 1 bis 5, wobei die Überwachungseinheit (3) ausgebildet ist, um bei Auftreten eines Fehlers ein Rücksetzsignal auszugeben, um die Verarbeitungseinheit (2) zurückzusetzen.

7. Überwachungseinheit (3) nach Anspruch 6, wobei nach einer Rücknahme des Rücksetzsignals die Ausgabe des Signals mit wechselndem Pegel als Notlaufsignal (NLS) erst nach Ablauf einer Neustart-Zeit und/oder einer Anlauf-Zeitdauer aufgenommen wird, wobei die Neustart-Zeit einer festgelegten Zeitdauer und die Anlauf-Zeitdauer einer Zeitdauer entspricht, während der eine vorbestimmte Anzahl von Pegelwechseln am Überwachungsanschluss (31) jeweils während einer vorbestimmten Zeitdauer detektiert wird.

8. Auswerteinheit (4) zum Auswerten des Notlaufsignals mit einer Empfangseinheit (41), die ausgebildet ist, das Notlaufsignal zu empfangen, und mit einer Auslöseeinheit (42), um eine Notlauffunktion zu aktivieren, wenn als Notlaufsignal kein Signal mit wechselndem Pegel empfangen wird.

9. Auswerteinheit (4) nach Anspruch 8, wobei die Auslöseeinheit (42) ausgebildet ist, um das Gesamtsystems oder Teile davon und/oder ein verzögertes Abschalten und/oder ein Diagnoseprozess zu starten, wenn kein Signal mit wechselndem Pegel empfangen wird.

10. Gesamtsystem mit einer Verarbeitungseinheit (2), mit einer Überwachungseinheit (3) nach einem der Ansprüche 1 bis 7 und einer Auswerteeinheit (4) nach Anspruch 8 oder 9.

11. Verfahren zum Überwachen der Funktion einer Verarbeitungseinheit (2), mit folgenden Schritten:
- Überwachen eines Betriebs der Verarbeitungseinheit (2), um einen Fehler festzustellen;
- Ausgeben eines Notlaufsignals, das angibt, ob ein Fehler in der Verarbeitungseinheit (2) festgestellt wurde oder nicht, durch eine Überwachungseinheit (3), wobei das Notlaufsignal einem Signal mit wechselndem Pegel entspricht, wenn kein Fehler festgestellt wurde, und einem konstanten Pegel entspricht, wenn ein Fehler festgestellt wurde;
- Empfangen des Notlaufsignals in einer von der Überwachungseinheit getrennten Auswerteeinheit (3);
- Aktivieren einer Notlauffunktion in der Auswerteeinheit (4), wenn als Notlaufsignal kein Signal mit wechselndem Pegel empfangen wird.
